# EUROPEAN PATENT APPLICATION

(11) **EP 1 441 544 A2**
(43) Date of publication of application: **28.07.2004**
(21) Application number: 04001247.8
(22) Date of filing: 21.01.2004
(51) Int. Cl.: H04N 13/00

(54) **Three-dimensional image display device**

(30) Priority: 24.01.2003 JP 2003015932
(71) Applicant: Pioneer Corporation, Meguro-ku, Tokyo (JP)
(72) Inventor: Okuda, Yoshiyuki, Corp. Research & Development Lab, Tsurugashima-shi Saitama 350-2288 (JP); Yoshizawa, Atsushi Corp Research & Development Lab, Tsurugashima-shi Saitama 350-2288 (JP); Satoh, Hideo, Corp. Research & Development Lab, Tsurugashima-shi Saitama 350-2288 (JP); Chuman, Takashi, Corp. Research & Development Lab, Tsurugashima-shi Saitama 350-2288 (JP); Hata, Takuya, Corp. Research & Development Lab, Tsurugashima-shi Saitama 350-2288 (JP); Uchida, Yoshihiko Corp. Research & Development Lab, Tsurugashima-shi Saitama 350-2288 (JP)
(74) Representative: Manitz, Finsterwald & Partner GbR

(57) **Abstract**

A three-dimensional image display device including at least one transmissive light-emitting display panel and a second light-emitting display panel located behind the transmissive panel. Each of the transmissive and second light-emitting display panels has patterned conductors each extending in a horizontal or vertical direction. Each patterned conductor includes a plurality of light-emitting portions and a bus line extending in the horizontal or vertical direction and bridged and connected to the light-emitting portions so that the light-emitting portions of patterned conductors are arranged in two dimensions. Each light-emitting portion includes a light-emitting layer made of an organic compound exhibiting electroluminescence. Each patterned conductor is formed into a zigzag.

## Description

### BACKGROUND OF THE INVENTION

### 1. Field of the Invention

The present invention relates to a three dimensional image display device with a transmission type light-emitting display panel having a light-emitting portion.

### 2. Description of the Related Art

As a transmission type light-emitting display panel having a light-emitting portion, for example, an electroluminescent display panel is known, which utilizes a thin film of an inorganic or organic material exhibiting electroluminescence (hereinafter referred to as EL), i.e. light emission caused by injection of an electric current, and which contains a light-emitting layer made of such EL material.

One of the applications of such transmission type light-emitting display panel is a three dimensional image display device. For example, when viewing an image on a backside display panel together with an identical image on a front transmission type light-emitting display panel placed away from the backside display panel in a depth direction of the image, an observer does not see two images of different depths but a single image resulting from the merge of the two images. According to this principle, there is provided a three dimensional image display device, in which two identical images are changed in luminosity (brightness) ratio therebetween thereby to permit an observer to construct the merged image thereof as a three dimensional image in his or her head (for example, see JP-A-2000-115812).

However, the moire caused by interference of two stripe groups images may occur generally in a display panel displaying an image, as is not always limited in the case of three dimensional image display devices.

### SUMMARY OF THE INVENTION

Therefore, one of challenges that the invention is to solve is, as an example, to provide a three-dimensional image display device, which can make it harder for an observer to recognize the moire and offer a clear picture image to the observer.

A three dimensional image display device according to the invention comprises:
at least one transmissive light-emitting display panel; and
a second light-emitting display panel located behind said transmissive light-emitting display panel,
wherein each of said transmissive and second light-emitting display panels includes patterned conductors,
wherein each of the patterned conductors includes a plurality of light-emitting portions and a bus line extending in a horizontal or vertical direction and bridged and connected to the light-emitting portions so that the light-emitting portions of patterned conductors are arranged in two dimensions, and
wherein each of the light-emitting portions includes a light-emitting layer made of an organic compound exhibiting electroluminescence, and
wherein each of the patterned conductors is formed into a zigzag.

### BRIEF DESCRIPTION OF THE DRAWINGS

Fig. 1 is a schematic perspective view showing a three-dimensional image display device of an embodiment according to the invention;
Fig. 2 is a schematic partial sectional view showing a transmission type front light-emitting display panel and a backside light-emitting display panel in the three dimensional image display device of another embodiment according to the invention;
Fig. 3 is a plan view showing the pixels and bus lines of light-emitting portions in the transmission type front light-emitting display panel of another embodiment according to the invention; and
Figs. 4 and 5 are each a plan view showing the pixels and bus lines of the light-emitting portions in the transmission type front light-emitting display panel of another embodiment according to the invention.

### DETAILED DESCRIPTION OF THE INVENTION

Embodiments of the three dimensional image display device according to the invention will be described in reference to the drawings.

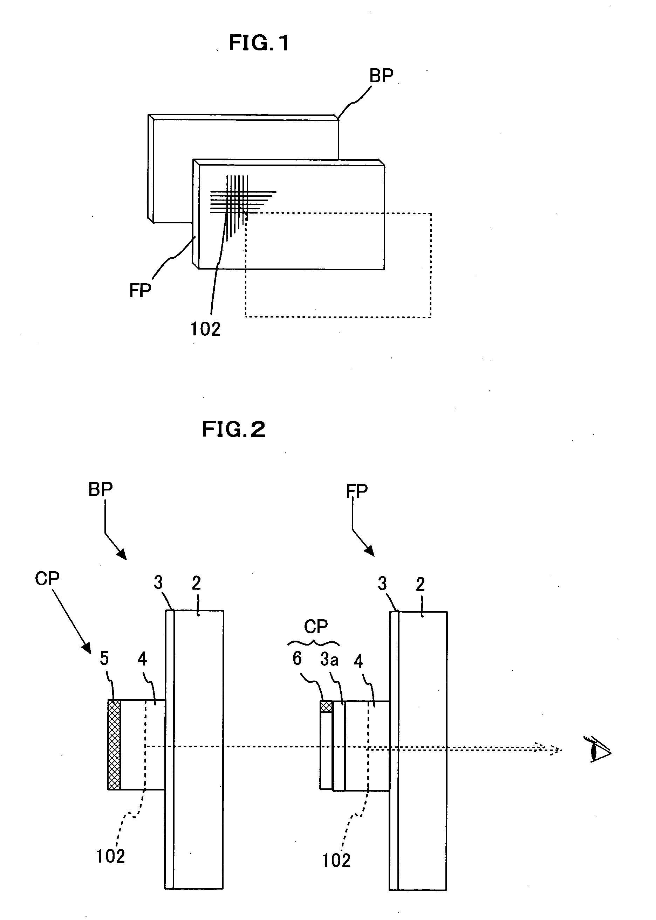

Fig. 1 shows a three dimensional image display device containing a transmission type front light-emitting display panel FP and a backside light-emitting display panel BP, which are supported by a frame (not shown) and located in such a way that one lies before the other along a direction of the normals with respect to their display surfaces. Such display device has electric circuits such as a power source, an address driver, a data driver, and a controller, which are not shown, in addition to the front and backside display panels.

The transmission type front light-emitting display panel FP may be, for example, a transmission type organic EL display device configured of a plurality of organic EL elements according to the passive matrix driving method. The backside light-emitting display panel BP may be an organic EL display device configured of a plurality of organic EL elements according to the active matrix driving method, for example.

The backside light-emitting display panel BP contains, on the display surface, n scanning lines individually formed at given intervals in parallel to a horizontal direction and m data lines individually formed at given intervals in parallel to a vertical direction, in which the scanning lines and the data lines are spaced by a given distance away from each other and located in such a way as to form a right angle therebetween. Consequently, light-emitting portions 102 are formed at respective portions corresponding to the intersection points of n scanning lines and m data lines and hence the number of which is n times m (n x m). In addition, the display device also contains a source line, etc., which is connected to each of the light-emitting portions 102. One end of each of the lines is connected to the corresponding driver. More specifically, the address driver applies a voltage to the scanning lines one at a time in order. The data driver applies a data voltage for causing the light-emitting portions to emit light to the data lines. The controller is connected with the address and data drivers to control the operations of the address and data drivers according to a previously supplied image data.

As shown in Fig. 2, taking, for example, the transmission type front light-emitting display panel FP and the backside light-emitting display panel BP, when the transmission type front light-emitting display panel FP is placed away from the backside light-emitting display panel BP in its depth direction, the light emission from both the display panels is viewed from the front side. The light-emitting portion 102 of an organic EL element in the backside light-emitting display panel BP has a structure such that on a glass substrate 2 are stacked in turn a transparent electrode 3, a plurality of organic compound material layers 4 including a light-emitting layer, which are substantially transparent when the element emits no light, and a metal electrode 5, as shown in Fig. 2. Further, the light-emitting portion 102 of an organic EL element in the transmission type front light-emitting display panel FP has a structure such that on a glass substrate 2 are stacked in turn a transparent electrode 3, a plurality of organic compound material layers 4 including a light-emitting layer, which are substantially transparent when the element emits no light, and a second transparent electrode 3a, as shown in Fig. 2.

Accordingly, the lights from the organic EL element light-emitting portions 102 of the backside light-emitting display panel BP and transmission type front light-emitting display panel FP propagate toward an observer on the front side, and hence when the observer views same images on the display panels produced by the emitted light with a given ratio of the luminosity (brightness), the observer can view a single image resulting from the merge of the two images different in depth. At this time, the observer can recognize the merged image of a given brightness ratio as a three dimensional image in his or her head.

This three-dimensional image display device requires no 3D-specific glasses and permits natural three-dimensional display, and therefore the display device causes the observer to feel fatigue less frequently.

Transparent electrodes are generally used for the cathodes of the transmission type front light-emitting display panel FP in the case where the transmission type front light-emitting display panel FP and the backside light-emitting display panel BP are superposed over and in parallel with each other so that the pixels of one panel correspond to the respective ones of the other panel and thus arranged display panels perform display thereby to provide a 3D display. The transparent electrode has a resistance value higher than that of a metal electrode, and hence the transparent electrode needs to be connected using a bus line made of a metal or metal alloy, such as aluminum with a low resistance.

The interference resulting from superposition of the lattice patterns of the transmission type front light-emitting display panel and backside light-emitting display panel causes the moire, in the case where the two superposed panels are of a dot matrix of a regular square lattice and identical in pitch. The following fact was confirmed by an experiment. That is, the metal bus line on a cathode provided in the transmission type front light-emitting display panel wielded especially the largest influence and a lateral stripe moire appeared noticeably.

The moire occurs under the influence of opaque bus lines made of a metal or the like. Therefore, in order to suppress the occurrence of moire, a 3D display configured of a transmission type front light-emitting display panel FP and a backside light-emitting display panel BP was made to check the influence of the bus lines.

In this embodiment, each of the backside light-emitting display panel BP and the transmission type front light-emitting display panel FP has a patterned conductor CP extending in a horizontal or vertical direction. The patterned conductor CP includes a plurality of light-emitting portions 102 arranged in two dimensions. Each light-emitting portion 102 includes a light-emitting layer made of an organic compound exhibiting electroluminescence. The patterned conductor CP further includes a plurality of bus lines 6 built in such a way as to be respectively connected to groups (of rows or columns) of adjacent light-emitting portions 102 of the light-emitting portions. In one of the backside light-emitting display panel BP or the transmission type front light-emitting display panel FP, the patterned conductor CP is formed into a zigzag. The other panel's patterned conductor is formed into a in a straight line form, for example. Thus, shaping the patterned conductor of one panel into a zigzag or polygonal line, which proceeds by sharp turns in alternating directions, can eliminate the correlation between backward and forward patterns of the transmission type front light-emitting display panel FP and backside light-emitting display panel BP.

The 3D displays were fabricated by using standard organic EL display panels for the backside light-emitting display panel BP and transparent organic EL display panels for the transmission type front light-emitting display panel FP. The details of the 3D display are as follows.

### [Backside Light-emitting Display Panel]

First, a layer of indium tin oxide (ITO) was formed on a glass substrate. Then, the resulting ITO film was processed to form a plurality of stripe ITO transparent electrodes (anodes) arranged in a periodic pattern.

An insulating layer was formed on the ITO transparent electrodes and then the resulting film was processed to provide openings (for light-emitting portions) to expose portions of the ITO transparent electrodes. In addition, linear cathode partitions for separating cathodes each other were formed perpendicular to the stripe ITO transparent electrodes so as to avoid exposed the portions.

After that the organic compound material layers making up the organic EL element were in turn grown on the transparent electrode (anode) by the vacuum deposition technique. The following materials were used for the layers: copper phthalocyanine (CuPc) for a hole injection layer; 4,4'bis(N-(naphthyl)-N-phenyl-amino)biphenyl (NPB) for a hole transport layer; tris(8-hydroxyquinolinolato N1, O8) aluminum (Alq3) for a light-emitting layer; 2,9-dimethyl-4,7-diphenyl-,1,10-phenathroline (BCP) for an electron transport layer; and LiF for an electron injection layer.

On the uppermost layer on the electron injection side, a pattern of metal electrodes (cathodes) such as Al was formed with a spripe pattern caused by the cathode partitions.

In order to protect the organic EL element, the element was sealed with a glass covering from the upside of the metal cathode pattern.

### [Transmission type Front Light-emitting Display Panel]

An transmission type front light-emitting display panel was manufactured, which was the same as the above-described backside light-emitting display panel except that, using a transparent cathode instead of the metal cathode, the straight cathode pattern was changed to a zigzag cathode pattern.

### [Panel Assembling]

The transmission type front light-emitting display panel FP and the backside light-emitting display panel BP were spaced apart by a given distance, fixed to and in parallel with each other through spacers, and connected with drive circuits thereby to bring the three dimensional image display device to completion.

### [Evaluation]

By controlling the difference in image luminosity between the transmission type front light-emitting display panel and the backside light-emitting display panel, observers could feel a stereoscopic effect on an image in each display. The observation of moire were conducted.

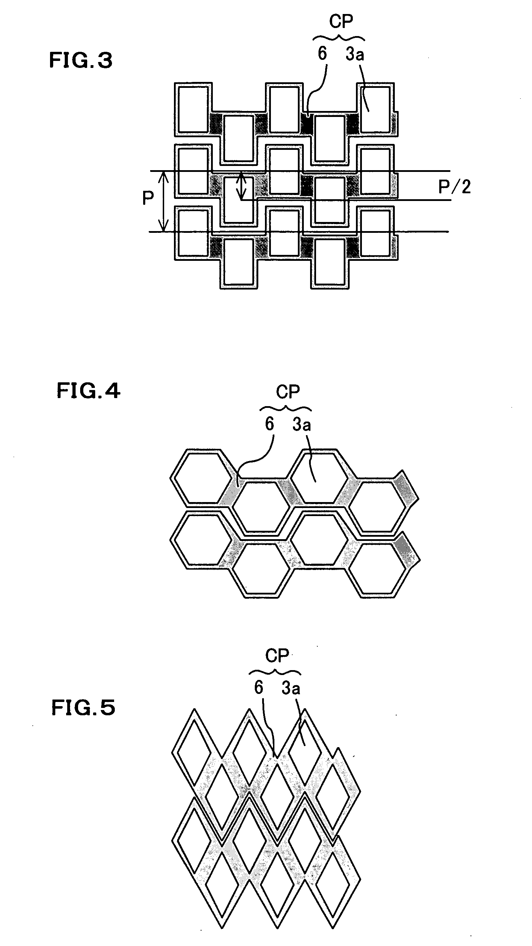

In the case where the pitch between patterned conductors CP extending in a horizontal direction was set at P in a zigzag pattern shown in Fig. 3, the pitch between transparent electrodes 3a alternately arrayed in turn in a vertical direction was changed to one half, i.e. P/2. In this time, the moire was not seen for a pitch of P/2.

Even when the patterned conductors CP of the transmission type front light-emitting display panel and backside light-emitting display panel were replaced with each other, the same result was obtained. Therefore, when the patterned conductor CP of any one of the panels is shaped into a zigzag to reduce the correlation of patterns between backward and forward panels, a moire suppression effect which avoids the elicitation of a moire pattern can be obtained.

Although the transparent electrode 3a of the light-emitting portion was of a rectangular form as shown in Fig. 3, its shape may be of a hexagonal form as shown in Fig. 4, or may be of a rhombic form as shown in Fig. 5. Although the patterned conductor horizontally extending has been described in the above embodiment, both the light-emitting display panels of the three dimensional image display device can be obtained even with a patterned conductor extending in a vertical direction.

In the foregoing experiment, the hole injection layer, the hole transport layer, the light-emitting layer, the electron transport layer, the electron injection layer and the transparent cathode were stacked in turn on the transparent anode on the transparent substrate. Other possible organic EL element structures include a structure which is the same as the foregoing experiment except that the electron injection layer between the electron transport layer and the transparent cathode is omitted. Also, the other possible organic EL element structures include a structure which is the same as the foregoing experiment except that the hole injection layer between the anode and the hole transport layer is omitted. The other possible organic EL element structures further include a structure which is the same as the foregoing experiment except that the electron injection layer and the hole injection layer are omitted.

Although a so-called forward direction stacking has been adopted in configuration of the transmission type front light-emitting display panel, the transmission type front light-emitting display panel can be also obtained by the reverse direction stacking in which the positions of the transparent anode and the cathode are reversed.

Although the above embodiments have been described only for a monochromatic wave length, a polychromatic light-emitting display device may be achieved as an alternative embodiment by independently and separately stacking, in a pixel portion at each matrix location, light-emitting layers, each of which is made of a different organic compound material exhibiting EL of a different light emission color, blue, green, or red, at the time of the application of an electric current.

Although the 3D display is made up of two panels, i.e. a backside light-emitting display panel BP and a transmission type front light-emitting display panel FP, in the above embodiments, another transmission type front light-emitting display panel may be further added thereto and superposed thereon, as shown by a broken line in Fig. 1, thereby to make up such 3D display from a backside light-emitting display panel and a plurality of transmission type front light-emitting display panels.

It is understood that the foregoing description and accompanying drawings set forth the preferred embodiments of the invention at the present time. Various modifications, additions and alternative designs will, of course, become apparent to those skilled in the art in light of the foregoing teachings without departing from the spirit and scope of the disclosed invention. Thus, it should be appreciated that the invention is not limited to the disclosed embodiments but may be practiced within the full scope of the appended claims.

## Claims

1. A three-dimensional image display device comprising:
at least one transmissive light-emitting display panel; and
a second light-emitting display panel located behind said transmissive light-emitting display panel,
**characterized in that** each of said transmissive and second light-emitting display panels includes patterned conductors,
wherein each of the patterned conductors includes a plurality of light-emitting portions and a bus line extending in a horizontal or vertical direction and bridged and connected to the light-emitting portions so that the light-emitting portions of patterned conductors are arranged in two dimensions, and
wherein each of the light-emitting portions includes a light-emitting layer made of an organic compound exhibiting electroluminescence, and
wherein each of the patterned conductors is formed into a zigzag.

2. The three-dimensional image display device according to claim 1, wherein
the light-emitting portions of said transmissive light-emitting display panel are located in a periodic pattern; and
said second light-emitting display panel has light-emitting portions located in a periodic pattern.

3. The three-dimensional image display device according to claim 2, wherein the periodic patterns each have a matrix layout.

4. The three-dimensional image display device according to any one of claims 1-3, wherein
the light-emitting portion of said transmissive light-emitting display panel includes
at least one organic compound material layer made of an organic compound in contact with the light-emitting layer and supplying holes or electrons to the light-emitting layer, and
a pair of transparent electrodes sandwiching the light-emitting layer and the organic compound material layer therebetween; and
one of the transparent electrodes is connected to the bus line.

5. The three-dimensional image display device according to claim 4, wherein the one transparent electrode connected to the bus line is a cathode.

6. The three-dimensional image display device according to any one of claims 1-5, wherein the light-emitting portion is formed in a rectangular form.

7. The three-dimensional image display device according to any one of claims 1-5, wherein the light-emitting portion is formed in a hexagonal form.

8. The three-dimensional image display device according to any one of claims 1-5, wherein the light-emitting portion is formed in a rhombic form.

9. The three-dimensional image display device according to any one of claims 1-8, wherein the patterned conductors have a pitch of P set therebetween, and the light-emitting portions alternately arrayed in the patterned conductors have a pitch P/2 set therebetween.
